# EUROPÄISCHE PATENTSCHRIFT

(11) **EP 0 675 300 B1**
(45) Veröffentlichungstag und Bekanntmachung des Hinweises auf die Patenterteilung: **21.06.2000**
(21) Anmeldenummer: 95104609.3
(22) Anmeldetag: 29.03.1995
(51) Int. Cl.: F16H 25/22, B29C 45/68, B29C 45/66

(54) **Vorrichtung zur drehsicheren Festlegung eines Spindelmechanismus**
Device for locking rotation of a spindle mechanism
Dispositif de blocage en rotation d'un mécanisme de broche

(30) Priorität: 02.04.1994 DE 4411651
(43) Veröffentlichungstag der Anmeldung: 04.10.1995
(73) Patentinhaber: Hehl, Karl, 72290 Lossburg (DE)
(72) Erfinder: Hehl, Karl, 72290 Lossburg (DE)
(74) Vertreter: Reinhardt, Harry

(56) Entgegenhaltungen:
- EP-A- 0 271 588
- EP-A- 0 576 925
- GB-A- 1 184 909
- PATENT ABSTRACTS OF JAPAN vol. 14, no. 351 (M-1003), 30.Juli 1990 & JP 21 021807 A (MITSUBISHI), 9.Mai 1990,
- PATENT ABSTRACTS OF JAPAN vol. 18, no. 186 (M-1585), 30.März 1994 & JP 05 345339 A (SODICK), 27.Dezember 1993,

## Beschreibung

Die Erfindung betrifft eine Vorrichtung zur drehsicheren Festlegung eines Kugelrollspindelmechanismus nach dem Oberbegriff des Anspruches 1.

Bei einer derartigen Vorrichtung nach der EP-B 271 588, insbesondere Fig. 3, sind zwei Spindelsysteme hintereinander geschaltet, die bei der Formschlußbewegung einer Kunststoff-Spritzgießmaschine einerseits die Bewegung des beweglichen Formträgers und andererseits die Aufbringung der Schließkraft bewirken. Während in den ersten beiden Ausführungsbeispielen dieser Druckschrift elektromagnetische Kupplungen vorgesehen sind, um die jeweils nicht benötigte Spindel aus dem Kraftfluß herauszutrennen, werden im dritten Ausführungsbeispiel Bremsmittel oder Klauenkupplungen vorgesehen. Bei der Klauenkupplung erfolgt die Kupplung gegen die Kraft einer Feder, deren Kraft so bemessen ist, daß beim Aufbau der Zuhaltekraft des Spritzgießwerkzeugs eine formschlüssige Kupplung trotz der Kraft der Feder möglich ist. Insofern wird hier ein Rückdrehen der Spindel bis zum formschlüssigen Kontakt der Klauenkupplung zugelassen, was die Regelung der Schließkraft erschwert. Werden aber lediglich Bremsmittel vorgesehen, so ergibt sich aufgrund der großen Lastspielzahlen ein erheblicher Verschleiß der Kupplungen.

Im Bereich der Spritzgießeinheiten ist es aus der EP- A 576 925 auch bekannt, zwei Spindelantriebe hintereinander zu schalten, wobei der eine Spindelantrieb sich gegen die Kraft von Federn am stationären Formträger abstützt. In diesem Bereich ist ein Kraftspeicher vorgesehen, der es ermöglicht, während des Einspritzens den Motor für die Düsenaufsetzbewegung der Spritzgießeinheit abzuschalten.

Ausgehend von diesem Stand der Technik liegt der vorliegenden Erfindung die Aufgabe zugrunde, günstig die Lebensdauer und Verschleißfreiheit einer Vorrichtung der eingangs genannten Gattung zu erhöhen.

Diese Aufgabe wird durch die Merkmale des Anspruches 1 gelöst.

Eine derartige Vorrichtung zur drehsicheren Festlegung eines Kugelrollspindelmechanismus kann bei verschiedensten Maschinen eingesetzt werden, die lineare Bewegungen durchführen. Als Beispiel seien Werkzeugmaschinen, Spritzgießmaschinen zur Verarbeitung von Kunststoffen, pulverförmigen Massen und dergleichen oder Roboter genannt.

Bei Formschließeinheiten an Kunststoff-Spritzgießmaschinen müssen oft auch hohe Druckkräfte aufgebracht werden, unter denen eine Kugelrollspindel aufgrund ihres hohen Wirkungsgrades von selbst rückdrehen würde. Andererseits ist es gerade bei diesen Bewegungen oft erwünscht, einen geregelten Ablauf zu bewerkstelligen, was jedoch eine exakte Positionserfassung der zu bewegenden Teile erfordert, die durch ein derartiges Rückdrehen verfälscht werden können. Erfindungsgemäß ergibt sich nun eine Spindelrückdrehsicherung, bei der die Sicherung selbst aus den eigentlichen Druckelementen besteht und somit direkt in den Kraftfluß integriert ist. Die Schließkraft wird bei Stillstand der Spindeln vorzugsweise durch eine zusätzliche, gegebenenfalls von einer Zusatzeinrichtung hervorgebrachten Bewegung aufgebaut, so daß Reibkräfte und damit ein Verschleiß an den Blockiermitteln vermieden werden. Sobald die Spindel blockiert ist, können ihre Antriebsmotoren in energiesparender Weise abgeschaltet werden. Da die Spindeln selbst lediglich als Zuhaltekraftüberträger und nicht als Zuhaltekrafterzeuger eingesetzt werden, können die Spindeln entsprechend kleiner ausgelegt werden, oder es ergibt sich bei großen Spindeln eine entsprechend längere Lebensdauer, da die dynamische Belastung geringer ist. Die dynamische Belastung aber steht in direktem Zusammenhang mit der Gesamtlebensdauer des Spindelsystems.

Bei einer Ausbildung nach Anspruch 4 werden die Spindellager nur noch durch die Kräfte belastet, die beim Beschleunigen bzw. Abbremsen des beweglichen Formträgers auftreten. Im eigentlichen Hochdruckbereich der Werkzeugzuhaltung sind die Lager der Spindeln maximal mit der Kraft der Rückstellmittel beaufschlagt.

Nach Anspruch 6 werden die aufzubringenden Bewegungen und Kräfte gezielt einzelnen Baugruppen zugewiesen. Der Kugelrollspindelmechanismus dient zur Bewegung des beweglichen Formträgers, während die Schließkraft über eine zweite Einrichtung nach dem Zusammenführen der Gießform aufgebracht wird, wobei die Schließkraft zugleich für das Blockieren der Gewindespindel sorgt. Beim Aufbringen der Schließkraft werden Kugelrollspindelmechanismus, Abstützelement und beweglicher Formträger von der Einrichtung zur Aufbringung der Schließkraft beaufschlagt und sind insofern nur noch Zuhaltekraftüberträger. Aufgrund der klar aufgegliederten Kraftverteilung können die Antriebsmotoren auf ihre jeweilige Funktion genau abgestimmt werden, so daß im Spindelmechanismus günstigere kleine Antriebsmotoren einsetzbar sind.

Nach Anspruch 9 ist der bewegliche Formträger Teil einer Bewegungseinheit, die in sich steif ausgebildet ist und über Führungselemente exakt zum Ständer geführt werden kann. Dies erhöht die Führungsgenauigkeit, insbesondere aufgrund des in Schließrichtung gemessenen Abstandes zwischen dem beweglichen Formträger und dem Stützelement, der vom Spindelhub abhängig ist, so daß bei größeren Maschinen von selbst auch die Länge der Bewegungseinheit und damit die Abstützung verbessert wird. Dies erhöht aber die Präzision der gesamten Formschließeinheit.

Weitere Vorteile ergeben sich aus den Unteransprüchen sowie der nachfolgenden Figurenbeschreibung. Im folgenden wird die Erfindung anhand eines Ausführungsbeispieles erläutert. Es zeigen:
- Fig. 1: Die Vorrichtung, eingebaut in einer Formschließeinheit einer Spritzgießmaschine in einer Seitenansicht der Spritzgießmaschine,
- Fig. 2: eine Draufsicht auf die Spritzgießmaschine gemäß Fig. 1,
- Fig. 3: einen vergrößerten, teilweise geschnittenen Ausschnitt aus Fig. 2 im Bereich der Vorrichtung,

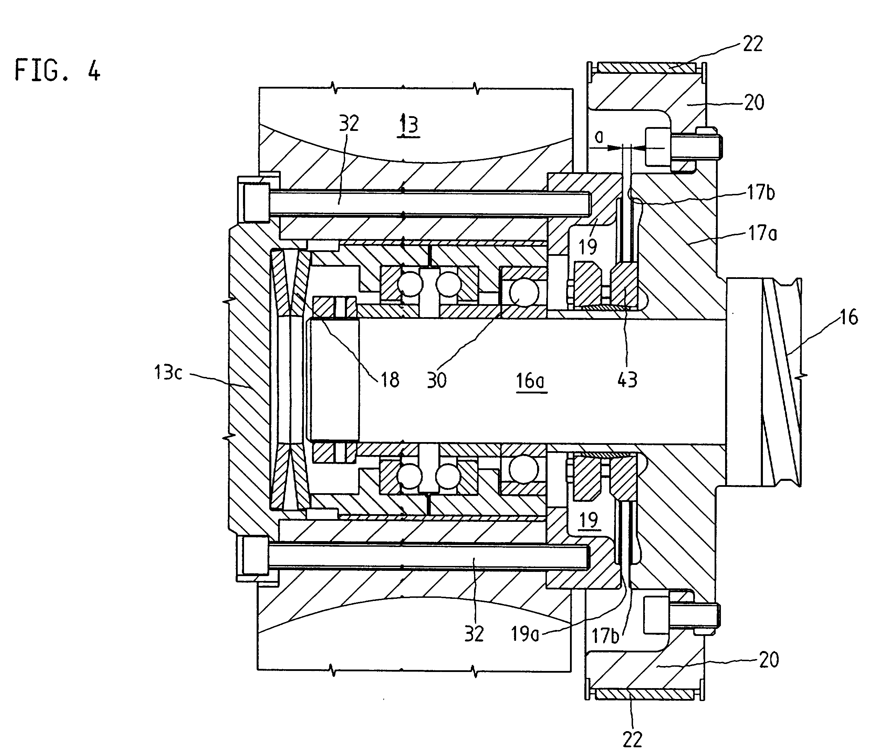

- Fig. 4: einen weiter vergrößerten Ausschnitt aus Fig. 3.

Die Vorrichtung dient zur drehsicheren Festlegung eines Kugelrollspindelmechanismus bestehend aus wenigstens zwei Teilen in Form einer Kugelrollspindel und einer mit der Kugelrollspindel 16 zusammenwirkenden Mutter 14. Entweder Gewindespindel 16 oder Mutter 14 sind als erstes Teil drehfest gelagert, während das jeweils andere Teil drehbar ist und gegen die Kraft eines elastischen Rückstellmittels 18 in Längsrichtung der Gewindespindel 16 beweglich gelagert ist. Der Kugelrollspindelmechanismus ist dabei an einem Abstützelement 13 einerseits abgestützt, wobei dort entweder die Gewindespindel 16 oder die Mutter 14 gelagert ist. Andererseits ist der Kugelrollspindelmechanismus 10 an einer ersten Baugruppe (z.B. Bewegungseinheit 47) beweglich gelagert, die über eine Antriebseinrichtung 15 zur Rotation des drehbaren Teils des Kugelrollspindelmechanismus 10 linear bewegt wird. Die Bewegung bringt dabei die erste Baugruppe in die Anlage mit einer weiteren Baugruppe. Vorzugsweise an der ersten Baugruppe ist das erste Teil des Kugelrollspindelmechanismus 10 stationär, drehfest gelagert.

Um ein Rückdrehen der Kugelrollspindel 16 bei Belastung zu vermeiden, wird bei der Anlage der ersten Baugruppe an der zweiten Baugruppe das weitere drehbare Teil infolge einer durch eine äußere Kraft hervorgerufenen Reaktionskraft unter Überwindung der Kraft der Rückstellmittel 18 gegen Drehung dadurch gesichert, daß es in Anlage mit dem jeweils nächsten Lagerpunkt des Kugelrollspindelmechanismus kommt, also in Anlage entweder mit dem Abstützelement 13 oder mit der ersten Baugruppe. Die Blockiermittel 17 sind jedoch so angeordnet, daß sie selbst bei Anlage der beiden Baugruppen aneinander von der ersten Baugruppe oder dem Abstützelement 13 beabstandet sind. Bei Auftreten der äußeren Kraft wird das weitere drehbare Teil über die Antriebseinrichtung 15 so lange gegen Drehen gesichert gehalten, bis der Abstand b zwischen der ersten Baugruppe und den Blockiermitteln 17 bzw. zwischen dem Abstützelement 13 und den Blockiermitteln 17 aufgehoben ist.

Diese Vorrichtung kann vielfach an Maschinen und insbesondere an Kunststoff-Spritzgießmaschinen eingesetzt werden, da hier vielfach zweistufige Bewegungen erfolgen. Im folgenden wird daher die Erfindung an den Figuren anhand einer Kunststoff-Spritzgießmaschine, genauer gesagt anhand der Formschließeinheit einer derartigen Maschine weiter erläutert.

Die erste Baugruppe ist insofern ein beweglicher Formträger 11, der vom Kugelrollspindelmechanismus bewegt wird. Er gerät in Anlage mit dem als weitere Baugruppe ausgebildeten stationären Formträger 12. Die äußere Kraft wird dabei über eine Einrichtung 24 zur Aufbringung der Schließkraft erzeugt.

Die Einrichtung zur Aufbringung der Schließkraft wird nach dem Kugelrollspindelmechanismus während des Formschlusses betätigt. Der Kugelrollspindelmechanismus 10 stützt sich an einem Abstützelement 13 ab, das durch Kraftübertragungsmittel 25 mit dem stationären Formträger in Verbindung steht.

In Schließrichtung und aus Sicht des beweglichen Formträgers 11 hinter dem ersten Abstützelement 13 ist ein weiteres Abstützelement 31 zur Abstützung der Einrichtung zur Aufbringung der Schließkraft vorgesehen. Wird diese Einrichtung betätigt, so beaufschlagt sie den Kugelrollspindelmechanismus 10 mit Abstützelement 13 und beweglichem Formträger 11 in ihrer Gesamtheit als Zuhaltekraftüberträger. Krafterzeuger für die Schließkraft hingegen ist lediglich die Einrichtung.

Der Kraftfluß erfolgt also ausgehend vom beweglichen Formträger 11 zunächst über die erste Einrichtung zum Abstützelement 13, das seinerseits über Übertragungselemente mit dem weiteren Abstützelement 31 verbunden ist. Abstützelement 13 und beweglicher Formträger sind insofern auch an den Kraftübertragungsmitteln beweglich gehalten. Ausgehend vom weiteren Abstützelement erfolgt der Kraftfluß dann über die Kraftübertragungsmittel 25, die im Ausführungsbeispiel Holme sind, zum stationären Formträger 12. Statt dieser Holme können als Kraftübertragungsmittel jedoch auch Elemente vorgesehen sein, die die Schließkraft um den Formspannraum herumleiten oder es kann sogar der Maschinenfuß als Kraftübertragungsmittel vorgesehen werden. Die gesamte Formschließeinheit ist lediglich am stationären Formträger 12 über Befestigungsmittel 36 mit dem Maschinenfuß 26 verbunden.

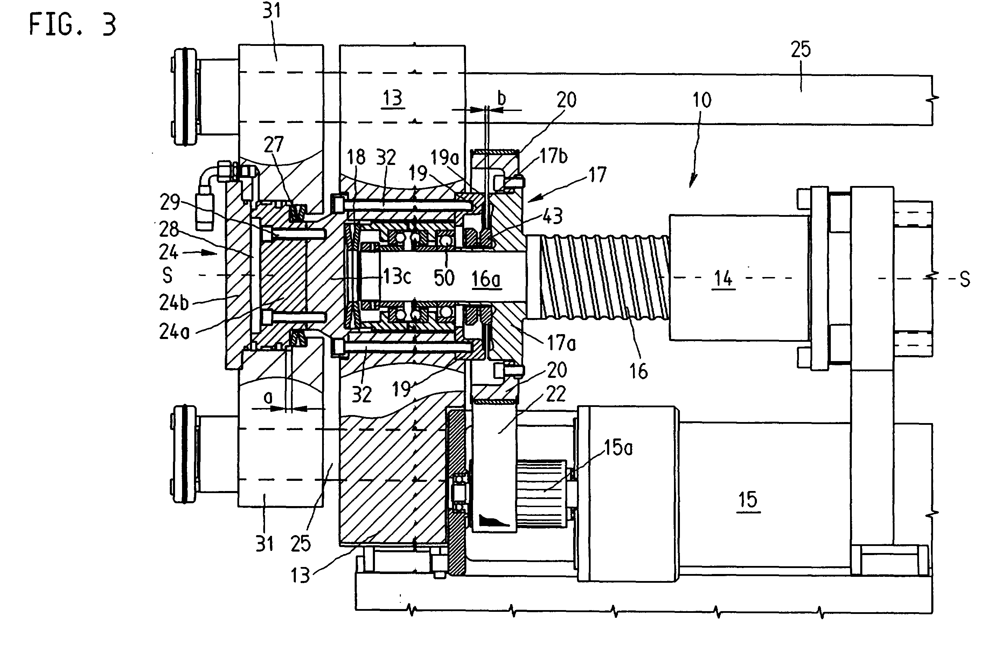

Als Einrichtung 24 ist ein Hydraulikantrieb vorgesehen. Hierbei steht der Ansatz 13c gemäß Fig. 3 über Bolzen 29 mit dem Kolben 24a der hydraulischen Antriebseinheit in Verbindung. Die hydraulische Antriebseinheit besitzt einen Zylinderraum 28, der durch einen Zylinderdeckel 24b verschlossen ist. Die Bewegung erfolgt gegen die Kraft von elastischen Rückstellmitteln 27, die auch bei geöffneter Form für einen eindeutigen Abstand zwischen erstem Abstützelement 13 und weiteren Abstützelement 31 sorgen.

Der Kugelrollspindelmechanismus besitzt zwei Kugelrollspindeln, da dadurch die großen Rückdrehmomente bei Werkzeugzuhaltung sich zum Teil wieder aufheben und hierdurch die Führungssysteme weniger belasten. Die Kugelrollspindel 16 wirkt mit einer Mutter 14 zusammen, die über ein Stützelement 37 in der Formschließeinheit abgestützt ist. Das Stützelement 37 ist ferner über Zuganker 38 mit dem beweglichen Formträger verbunden. Die Zuganker 38 spannen Rohre 46 zwischen dem Stützelement 37 und dem beweglichen Formträger ein. Dadurch wird eine in sich steife und leicht zu führende Bewegungseinheit 47 aus diesen Teilen gebildet, was die Präzision der Maschine erhöht. Die Länge der Bewegungseinheit wird vor allem durch die Rohre 46 bestimmt, die die Kugelrollspindel aufnehmen, und damit vom Spindelhub. Der Antrieb der Kugelrollspindeln 16 - es kann auch nur eine vorgesehen sein - erfolgt über eine Antriebseinrichtung 15, auf deren Motorwelle 15a zwei Riemen 22, 23 angetrieben werden, die Riemenräder 20, 21 antreiben.

Um bei Aufbringen der Schließkraft ein Rückdrehen der Kugelrollspindel 16 zu vermeiden, sind Blockiermittel 17 vorgesehen. Die Blockiermittel 17 umfassen eine Blockierscheibe 17a, die an der Achse 16a der Gewindespindel 16 über Schrumpfmittel 43 festgehalten ist. Die Achse 16a selbst ist über Lager 50 gelagert und gegen die Kraft elastischer Rückstellmittel 18 in Längsrichtung der Spindel beweglich. Beim Aufbringen der Schließkraft kommt die Blockierscheibe mit dem Abstützelement 13 in Berührung. Die Blockierscheibe 17a besitzt einen sich in Längsrichtung der Kugelrollspindel 16 erstreckenden umlaufenden Ring 17b, der beim Blockiervorgang mit einem entgegengesetzt gerichteten ringförmigen Vorsprung 19a eines Lagerrings 19 in kraftschlüssige Verbindung gelangt. Ring 17b und ringförmiger Vorsprung 19a können ggf. zum Aufbau einer formschlüssigen Verbindung auch verzahnt sein. Der Lagerring 19 ist über Bolzen 32 mit dem Ansatz 13c verbunden, wobei diese beiden Elemente zwischen sich die Lagerung für die Achse 16a aufnehmen. Im Ausführungsbeispiel ist die Blockierscheibe gleichzeitig die Nabe des Riemenrades 20, 21. Mutter und Spindel können von der Funktion her ausgetauscht werden.

Der Abstand b zwischen dem Ring 17b der Blockierscheibe 17a und dem ringförmigen Vorsprung 19a des Lagerringes 19 ist bei geschlossener Gießform und vor Aufbringen der Schließkraft kleiner als der Hub a des Kolbens 24a. Andere Antriebe als der hydraulische sind in der Einrichtung 24 denkbar wie z.B. elektromechanische Exzenterantriebe.

Die Betätigung erfolgt grundsätzlich so, daß zunächst über die Kugelrollspindel die Gießform 33 geschlossen wird. Der Abstand b wird über Rückstellmittel 18 konstant gehalten, bis die Hälften der Gießform 33 in Anlage kommen. Sodann wird die Einrichtung 24 geschaltet, wobei zunächst der Abstand b beseitigt wird. Zu diesem Zeitpunkt muß die Antriebseinrichtung 15 noch arbeiten, damit ein Rückdrehen verhindert wird. Sobald jedoch der Abstand b überwunden ist, stellt sich aufgrund der kraftschlüssigen Verbindung eine Blockierung der Kugelrollspindel 16 ein, so daß während des weiteren Aufbringens der Kraft die Blockiereinrichtung nur noch ein Druckelement ist, das in den Kraftfluß integriert ist. Die Lager sind somit nur noch mit der Kraft der Tellerfedern beaufschlagt, die so stark eingestellt sind, daß bei Bewegen des Formträgers noch kein Blockieren möglich ist und dieses sich erst dann einstellt, wenn die Einrichtung 24 zugeschaltet wird. Nach dem Blockieren wird die Antriebseinrichtung 15 in energiesparender Weise abgeschaltet. Die Blockiereinrichtung wird vorzugsweise so ausgebildet, daß es nicht zu einem Gleiten zwischen Blockierscheibe 17a und dem Lagerring 19 kommt. Bis zur Anlage der beiden Teile infolge der Betätigung der Einrichtung 24 zur Aufbringung der Schließkraft wird daher die Antriebseinrichtung 15 betrieben, so daß die beiden Teile im Ruhezustand, also bei ruhender Blockierscheibe, aufeinandertreffen und dann die kraftschlüssige Verbindung eingehen.

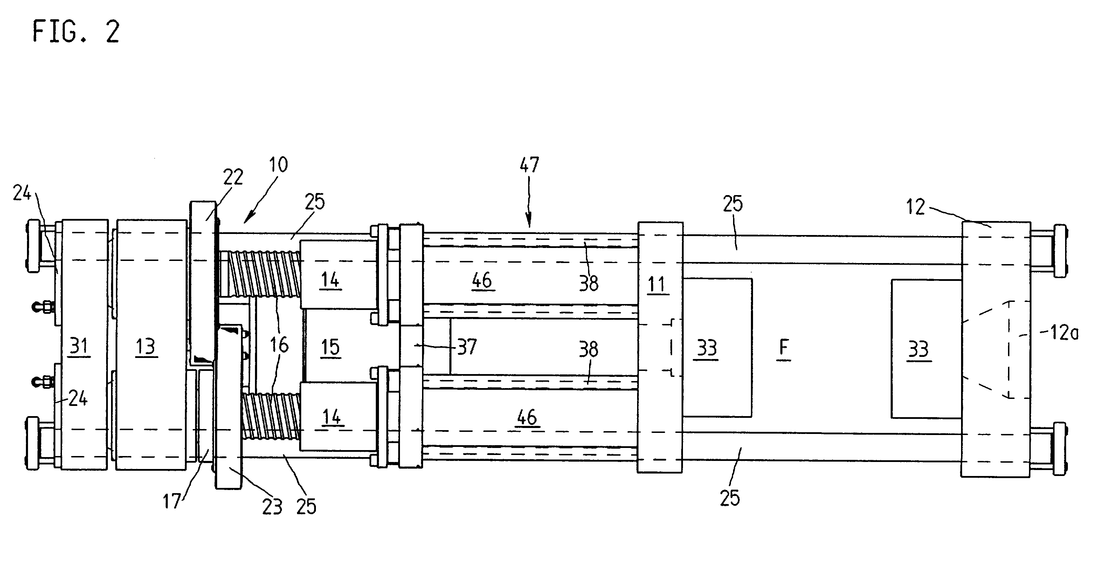

Die gesamte Formschließeinheit ist weitgehend symmetrisch zu einer vertikalen Mittelebene aufgebaut. Die beiden Riemenräder der Einrichtung sind in Schließrichtung s-s gegeneinander versetzt (Fig. 2, 7). Die symmetrische Anordnung insbesondere bei zwei Kugelrollspindeln hat aber auch den Vorteil, daß zwischen den beiden Spindeln bedarfsweise eine Auswerfereinheit vorgesehen werden kann. Am stationären Formträger ist zudem eine Durchtrittsöffnung 12a vorgesehen, durch die eine Spritzgießeinheit an den Formhohlraum der Spritzgießform 33 heranführbar ist.

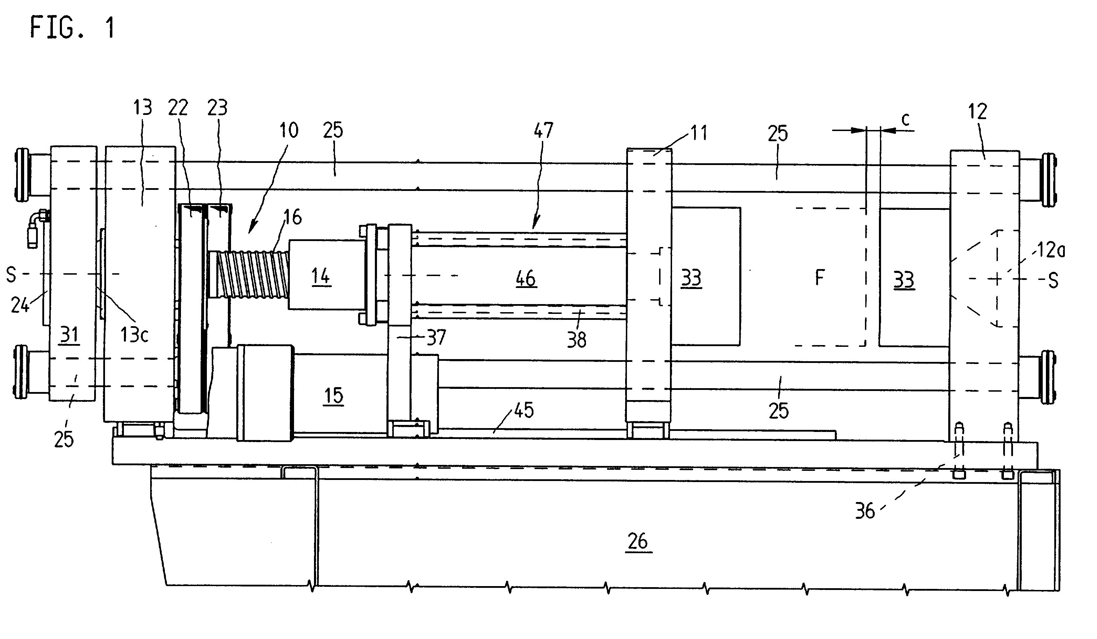

Die Einrichtung zur Aufbringung der Schließkraft läßt auch eine Regelung der Schließkraft zu. So können einerseits die Formhälften zunächst in Anlage gebracht werden (entsprechend einem Spaltmaß c = 0 in Fig. 1 bei dem dort gestrichelt eingezeichneten Formschluß), und die Einrichtung 24 wird dann über ein bestimmtes Maß betätigt, so daß damit eine bestimmte gewünschte, voreinstellbare Zuhaltekraft aufgebaut wird. Dies ist insbesondere dann erwünscht, wenn Spritzgießformen 33 sich in der Maschine befinden, die nicht mit der vollen Kraft der Formschließeinheit beaufschlagt werden dürfen oder sollen.

Andererseits kann auch ein Spritzprägen z.B. dadurch realisiert werden, daß die Formhälften zunächst auf ein beliebiges Spaltmaß c zusammengefahren werden und dann die zweite Einrichtung die Formschließeinheit in ihre Endlage überführt. Auch dadurch kann die maximal aufbringbare Kraft nach oben begrenzt werden.

Die Regelung erfordert verschiedene Hilfsmittel zur Ermittlung der Regelparameter, und hierzu kann z.B. zur Lagebestimmung des beweglichen Formträgers ein Servomotor mit Absolutweg-Meßsystem vorgesehen werden. Bei Verwendung eines Motors mit inkrementaler Wegmessung werden zusätzlich separate, parallel zur Spindelachse montierte Linearpotentiometer verwendet, die die aktuelle Lage des beweglichen Formträgers sicher melden. Aber auch die richtige Schließkraft kann mittels Kraftmeßbolzen in den Holmen nachgeregelt werden. Die Kraftmeßbolzen oder Druckmeßdosen können jedoch an beliebiger Stelle innerhalb des Kraftflusses angeordnet sein, wie z.B. bei einem Exzenter innerhalb des Lagerbolzens.

## Patentansprüche

1. Vorrichtung zur drehsicheren Festlegung eines Kugelrollspindelmechanismus (10) mit
- wenigstens zwei Teilen in Form einer Kugelrollspindel (16) einenteils und einer mit der Kugelrollspindel (16) zusammenwirkenden Mutter (14) anderenteils, wobei ein erstes Teil dieser zwei Teile drehfest gelagert ist, während das weitere drehbare Teil dieser zwei Teile gegen die Kraft und unter Zwischenschaltung eines elastischen Rückstellmittels (18) in Längsrichtung der Kugelrollspindel (16) beweglich gelagert ist, wobei das Rückstellmittel (18) an einer ersten Baugruppe oder an einem Abstützelement (13) abgestützt ist,
- einer Antriebseinrichtung (15) zur Rotation des weiteren drehbaren Teils zur Erzeugung einer linearen Bewegung einer ersten Baugruppe bis zur Anlage an einer weiteren Baugruppe,
- Blockiermitteln (17), die bei dieser Anlage das weitere drehbare Teil an der ersten Baugruppe bzw. am Abstützelement (13) infolge einer durch eine äußere Kraft hervorgerufenen Reaktionskraft unter Überwindung der Kraft der Rückstellmittel (18) gegen Drehung gesichert festlegen, wobei die Blockiermittel (17) wenigstens zwei Teile aufweisen, von denen ein Teil an der ersten Baugruppe bzw. am Abstützelement (13) angeordnet ist, während das andere Teil am drehbaren Teil angeordnet ist und wobei bei dieser Anlage die Blockiermittel (17) voneinander beabstandet sind und bei Auftreten der äußeren Kraft sich die Blockiermittel (17) infolge einer durch die äußere Kraft hervorgerufenen Relativbewegung zur Blockierung aufeinander zu bewegen,
dadurch gekennzeichnet, daß über die Antriebseinrichtung (15) das weitere drehbare Teil so lange gegen Drehen gesichert gehalten ist, bis der Abstand (b) zwischen den kraftschlüssigen Blockiermitteln (17) aufgehoben ist.

2. Vorrichtung nach Anspruch 1, dadurch gekennzeichnet, daß die Kugelrollspindel (16) das am Abstützelement (13) abgestützte drehbare Teil ist und die Mutter (14) das erste Teil ist, das an der ersten Baugruppe drehfest gelagert ist.

3. Vorrichtung nach Anspruch 1 oder 2, dadurch gekennzeichnet, daß der Kugelrollspindelmechanismus (10) einen beweglichen Formträger (11) einer Formschließeinheit einer Kunststoff-Spritzgießmaschine als erste Baugruppe in Anlage mit einem als weitere Baugruppe ausgebildeten stationären Formträger (12) bringt und daß eine Einrichtung (24) zur Aufbringung der Schließkraft die äußere Kraft erzeugt.

4. Vorrichtung nach Anspruch 1 oder 2, dadurch gekennzeichnet, daß als Blockiermittel (17) eine Blockierscheibe (17a) an der Achse (16a) der Kugelrollspindel (16) vorgesehen ist, die gegen die Kraft des elastischen Rückstellmittels (18) mit dem ersten Abstützelement (13) in Verbindung kommt.

5. Vorrichtung nach Anspruch 4, dadurch gekennzeichnet, daß die Blockierscheibe (17a) einen sich in Längsrichtung der Kugelrollspindel (16) erstreckenden, umlaufenden Ring (17b) aufweist, der beim Blockiervorgang mit einem entgegengesetzt A gerichteten ringförmigen Vorsprung (19a) eines Lagerrings (19) am Abstützelement (13) in kraftschlüssige Verbindung gelangt.

6. Vorrichtung nach einem der Ansprüche 1 bis 5, dadurch gekennzeichnet, daß ein weiteres Abstützelement (31) zur Abstützung der Einrichtung (24) zur Aufbringung der Schließkraft und der äußeren Kraft vorgesehen ist, die bei Betätigung den Kugelrollspindelmechanismus (10) mit Abstützelement (13) und beweglichem Formträger (11) beaufschlagt, wobei das Abstützelement (13) in Schließrichtung (s-s) beweglich gehalten ist und über einen Ansatz (13c) mit einem vorzugsweise gegen Rückstellmittel (27) beaufschlagbaren Kolben (24a) einer als Einrichtung (24) zur Aufbringung der Schließkraft ausgebildeten hydraulischen Antriebseinheit gekoppelt ist, der die Kräfte vom weiteren Abstützelement (31) überträgt.

7. Vorrichtung nach Anspruch 6, soweit dieser auf Anspruch 5 rückgezogen ist, dadurch gekennzeichnet, daß der Abstand (b) zwischen dem Ring (17b) der Blockierscheibe (17a) und dem ringförmigen Vorsprung (19a) des Lagerrings (19) bei geschlossener Gießform vor Aufbringen der Schließkraft kleiner ist als der Hub (a) des Kolbens (24a).

8. Vorrichtung nach einem der vorhergehenden Ansprüche, dadurch gekennzeichnet, daß die Antriebseinrichtung (15) über ihre Motorwelle (15a) über zwei Riemen (22,23) Riemenräder (20,21) antreibt, deren Nabe die Blockierscheibe (17a) ist.

9. Vorrichtung nach einem der vorhergehenden Ansprüche, dadurch gekennzeichnet, daß der bewegliche Formträger (11) Teil einer auf Führungen (45) geführten als Bewegungseinheit (47) ausgebildeten ersten Baugruppe ist, die Rohre (46) zur Aufnahme der Kugelrollspindel (16), ein Stützelement sowie diese Teile verspannende Zuganker (38) aufweist und von der ersten Einrichtung beaufschlagbar ist.

## Claims

1. Device for fixing a ball screw/nut mechanism (10) secure against turning, having
- at least two components in the form of a ball screw (16) on the one hand and a nut (14) on the other hand, co-operating with the ball screw (16), a first component of these two components being mounted non-rotatable, whilst the further rotatable component of these two components being mounted movable in the longitudinal direction of the ball screw (16) against the force of interposed resilient resetting means (18), the resetting means (18) being supported on a first subassembly or on a supporting element (13),
- a drive device (15) to rotate the further rotatable component in order to generate a linear movement of a first subassembly until it abuts against a further subassembly,
- blocking means (17), which during this abutting contact, fix the further rotatable component on the first subassembly or on the supporting element (13) secure against turning as a result of a reaction force caused by an external force, overcoming the force of the resetting means (18), the blocking means (17) having at least two parts, of which one part is disposed on the first subassembly or on the supporting element (13), whilst the other part is disposed on the rotatable component, and during this abutting contact, the blocking means (17) being at a spacing from one another and, when the external force arises, the blocking means (17) moving towards one another as a result of a relative movement caused by the external force, to provide the blocking,
**characterised in that,** via the drive device (15), the further rotatable component is held secured against turning until the clearance (b) between the non-positive blocking means (17) is eliminated.

2. Device according to claim 1, **characterised in that** the ball screw (16) is the rotatable component supported on the supporting element (13) and the nut (14) is the first component which is mounted non-rotatable on the first subassembly.

3. Device according to claim 1 or 2, **characterised in that** the ball screw/nut mechanism (10) brings a movable mould carrier (11) of a mould closing unit of a plastics injection moulding machine as the first subassembly into abutting contact with a stationary mould carrier (12) configured as a further subassembly, and that a device (24) for applying the closing force generates the external force.

4. Device according to claim 1 or 2, **characterised in that,** as blocking means (17), there is provided on the axle (16a) of the ball screw (16) a blocking disc (17a) which comes into engagement with the first supporting element (13) against the force of the resilient resetting means (18).

5. Device according to claim 4, **characterised in that** the blocking disc (17a) has a peripheral ring (17b) extending in the longitudinal direction of the ball screw (16), which ring comes into frictional engagement with an oppositely directed annular projection (19a) of a bearing ring (19) on the supporting element (13) during the blocking process.

6. Device according to one of claims 1 to 5, **characterised in that** a further supporting element (31) is provided to support the device (24) for applying the closing force and the external force, which device, on actuation, impinges on the ball screw/nut mechanism (10) with supporting element (13) and movable mould carrier (11), the supporting element (13) being held movable in the closing direction (s-s), and being coupled via a fitting strip (13c) with a piston (24a), which is preferably able to be acted upon against resetting means (27), of a hydraulic drive unit configured as the device (24) for applying the closing force, the piston transmitting the forces from the further supporting element (31).

7. Device according to claim 6, insofar as this refers back to claim 5, **characterised in that** the clearance (b) between the ring (17b) of the blocking disc (17a) and the annular projection (19a) of the bearing ring (19), when the mould is closed and before the closing force is applied, is smaller than the stroke (a) of the piston (24a).

8. Device according to one of the preceding claims, **characterised in that,** via its motor shaft (15a), the drive device (15) drives, via two belts (22, 23), pulleys (20,21), the hub of which is the blocking disc (17a).

9. Device according to one of the preceding claims, **characterised in that** that the movable mould carrier (11) forms part of a first subassembly, configured as a motion unit (47) and guided on guiding devices (45), which has tubes (46) to receive the ball screw (16), a supporting element and tension rods (38) bracing these parts, and which may be acted upon by the first device.

## Revendications

1. Dispositif pour la fixation solidaire en rotation d'un mécanisme (10) de broche à roulement à billes comportant
- au moins deux parties sous la forme d'une broche (16) à roulement à billes et d'autre part d'un écrou (14) qui coopère avec la broche (16) à roulement à billes, une première partie de ces deux parties étant montée solidairement en rotation, tandis que l'autre partie tournante de ces deux parties est montée déplaçable dans la direction longitudinale de la broche (16) à roulement à billes, à l'encontre de la force et par interposition d'un moyen de rappel (18) élastique, le moyen de rappel (18) étant soutenu contre un premier ensemble ou contre un élément d'appui (13),
- un dispositif d'entraînement (15) pour la rotation de l'autre partie tournante afin de produire un mouvement linéaire d'un premier ensemble jusqu'à son application contre un autre ensemble,
- des moyens de blocage (17) qui, au moment de cette application, fixent l'autre partie tournante, en la bloquant contre une rotation, contre le premier ensemble ou contre l'élément d'appui (13), par suite d'une force de réaction provoquée par une force extérieure et en surmontant la force des moyens de rappel (18), les moyens de blocage (17) comportant au moins deux parties dont une partie est disposée sur le premier ensemble ou sur l'élément d'appui (13), tandis que l'autre partie est disposée sur la partie tournante, et, lors de cette application, les moyens de blocage (17) étant espacés l'un de l'autre et s'éloignant l'un de l'autre pour le blocage, au moment où intervient la force extérieure, par suite d'un mouvement relatif provoqué par la force extérieure,
caractérisé en ce que l'autre partie tournante est maintenue bloquée contre une rotation, par l'intermédiaire du dispositif d'entraînement (15), jusqu'à ce que la distance (b) entre les moyens de blocage (17) à force soit supprimée.

2. Dispositif selon la revendication 1, caractérisé en ce que la broche (16) à roulement à billes est la partie tournante soutenue contre l'élément d'appui (13) et l'écrou (14) est la première partie qui est montée solidairement en rotation sur le premier élément.

3. Dispositif selon la revendication 1 ou 2, caractérisé en ce que le mécanisme (10) de la broche à roulement à billes amène un porte-moule (11) mobile à une unité de fermeture de moule d'une machine de moulage par injection de matière plastique en tant que premier ensemble, en application contre un porte-moule (12) stationnaire, réalisé en tant qu'autre ensemble, et en ce qu'un dispositif (24) produit la force extérieure pour appliquer la force de fermeture.

4. Dispositif selon la revendication 1 ou 2, caractérisé en ce qu'il est prévu comme moyen de blocage (17) un disque de blocage (17a) sur l'axe (16a) de la broche (16) à roulement à billes, qui vient en liaison avec le premier élément d'appui (13), à l'encontre de la force du moyen de rappel (18) élastique.

5. Dispositif selon la revendication 4, caractérisé en ce que le disque de blocage (17a) comporte un anneau (17b) périphérique qui s'étend dans la direction longitudinale de la broche (16) à roulement à billes et qui, au moment du blocage, parvient en liaison à force sur l'élément d'appui (13), par une saillie (19a) annulaire, dirigée en sens contraire, d'une bague de palier (19).

6. Dispositif selon l'une des revendications 1 à 5, caractérisé en ce qu'un autre élément d'appui (31) est prévu pour soutenir le dispositif (24) destiné à appliquer la force de fermeture et la force extérieure et qui, lorsqu'il est actionné, sollicite le mécanisme (10) de la broche à roulement à billes avec l'élément d'appui (13) et le porte-moule (11) mobile, l'élément d'appui (13) étant maintenu déplaçable dans le sens de fermeture (s-s) et étant accouplé, par un appendice (13c), avec un piston (24a), pouvant être sollicité de préférence à l'encontre de moyens de rappels (27), d'une unité d'entraînement hydraulique réalisée en tant que dispositif (24) destiné à appliquer la force de fermeture, lequel piston transmet les forces de l'autre élément d'appui (31).

7. Dispositif selon la revendication 6, dans la mesure où celle-ci se réfère à la revendication 5, caractérisé en ce que la distance (b) entre l'anneau (17b) du disque de blocage (17a) et la saillie (19a) annulaire de la bague de palier (19) est inférieure à la course (a) du piston (24a), lorsque le moule de coulée est fermé, avant application de la force de fermeture.

8. Dispositif selon l'une des revendications précédentes, caractérisé en ce que le dispositif d'entraînement (15) entraîne, par son arbre moteur (15a) par l'intermédiaire de deux courroies (22, 23), des roues (20, 21) de courroie dont le moyeu est le disque de blocage (17a).

9. Dispositif selon l'une des revendications précédentes, caractérisé en ce que le porte-moule (11) mobile fait partie d'un premier ensemble réalisé en tant qu'unité de déplacement (47) et guidé sur des organes de guidage (45), qui comporte des tubes (46) destinés à recevoir la broche (16) à roulement à billes, un élément d'appui ainsi que des tirants (38) tendant ces éléments, et peut être soumis à l'action du premier dispositif.
